# EUROPEAN PATENT APPLICATION

(11) **EP 1 582 887 A1**
(43) Date of publication of application: **05.10.2005**
(21) Application number: 05102132.7
(22) Date of filing: 18.03.2005
(51) Int. Cl.: G01S 1/68, G01S 5/00, G01S 5/14

(54) **A receiver for receiving and displaying of position data transmitted from radio beacons**

(30) Priority: 31.03.2004 GB 0407305
(71) Applicant: Mason, Peter, 51674 WIEHL (DE)
(72) Inventor: Mason, Peter, 51674 WIEHL (DE)

(57) **Abstract**

A receiving equipment capable of receiving position data from beacons operating in the vicinity and displaying, at least but not exclusively, the location of the beacon. The information obtained being used to enable a vehicle to steer to a position in the vicinity of the beacon position.

## Description

### Background art

Emergency Location equipment typically used for sea and land based location of Emergency incidents uses orbiting satellite technology to locate the incident and transmit this information to the national and international authorities. The Emergency beacon determines its position using techniques such as GPS which is then encoded in the transmitted signal to alert the national and international authorities.

### Disclosure of the invention

### The purpose of the invention {the inventive idea}

The purpose is to receive information from a beacon and to alert and inform those persons or amenities in the vicinity. The method used to alert includes but is not limited to acoustic, visual display and electronic data communication. The information provided includes but is not limited to the position of the beacon.

### Implementation {specific example of the invention}

The equipment consists of a receiver (1), capable of receiving signals from sources such as but not limited to Personal Location Beacons (PLB) or Emergency Position Indicating Radio Beacons (EPIRB) operating in the vicinity, a decoder (2) capable of interpreting the received signal and a display device to make the information available to the user.

The receiver (1) is either tuned to one or more fixed beacon frequencies or scans over a range of frequencies. The decoder (2) is used to interpret the protocol, which is known from published standards and encoded in the beacon signal.

The methods of display are various. Typically this would be an acoustic alert given when a valid position or other information is interpreted by the decoder. Another method would be a display of position or other information on a visual display device.

A further method of display would be a data communications channel connected to navigation or other equipment capable of interpreting the data and displaying the position of the beacon by some means.

Equipment mounted on a vehicle, vessel or other device and which is capable of interpreting the beacon position information provided by the interface (3) such as but not limited to an auto pilot capable of controlling the vehicle, vessel or other device, such that when suitably constructed, is able to steer the vehicle, vessel or other device to a position in the vicinity of the beacon position or to the beacon position.

### Brief description of the drawings

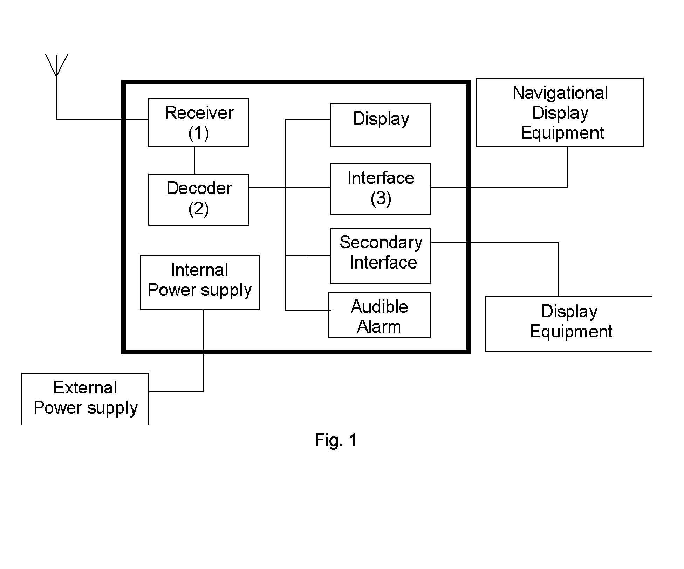

### Diagram (Figure 1) Schematic Drawing

### Best mode for carrying out the invention

Equipment consisting of a receiver (1), capable of receiving signals from sources such as but not limited to Personal Location Beacons (PLB) or Emergency Position Indicating Radio Beacons (EPIRB) operating in the vicinity, a decoder (2) capable of interpreting the received signal and a display device to make the information available to the user.

The receiver (1) is either tuned to one or more fixed beacon frequencies or scans over a range of frequencies. The decoder (2) is used to interpret the protocol, which is known from published standards and encoded in the beacon signal.

This information is transmitted on a data communications link connected to navigation or other equipment capable of interpreting the data and displaying the position of the beacon by some means such as but not limited to an electronic map of chart.

Equipment mounted on a vehicle, vessel or other device and which is capable of interpreting the beacon position information provided by the interface (3) such as but not limited to an auto pilot capable of controlling the vehicle, vessel or other device, such that when suitably constructed, is able to steer the vehicle, vessel or other device to a position in the vicinity of the beacon position or to the beacon position.

### Mode(s) for carrying out the invention

The methods of display are various. Typically the basic method of indication would be an acoustic alert given when a valid position or other information is interpreted by the decoder.

Another method would be a display of position or other information on a visual display device built into the receiver.

### Industrial applicability

The recovery of a man over board in a vessel at sea is always a problem. The crew may be tired, inexperienced or may not be aware of the incident if they are not on deck. The first essential is to alarm the rescue services of the incident. This can be done with the aid of a personal location beacon (PLB) operating on 406 MHz.

Previous PLB devices can determine the position of the incident to within an accuracy of 5 Km using Doppler interpolation from the orbiting satellite. The latest generation of PLB's has a built in GPS position which is encoded into the Beacon message and increases the positional accuracy to within 100m. This information is useful for alerting the emergency services who can respond appropriately.

At Sea in a man over board situation it essential to recover the casualty as quickly as possible and whilst the PLB will alert the professional services it would be greatly beneficial if the craft operating in the vicinity could read the beacon messages and be directed to the incident.

Many recreational craft are now equipped with advanced navigational equipment ranging from GPS navigational devices to chart plotters with autopilot capability. These devices have a data communications port which enables external devices to communicate with them. This allows external devices to set so-called waypoints indicating a position usually described in latitude and longitude.

The device described delivers the position of the casualty to all receivers within range.

### Emergency mode

On receiving a valid emergency message the unit logs exclusive messages which are received. In order to reduce the quantity of data that must be stored successive messages that do not change are recorded as in increment in a message counter. These messages are stored in a non-volatile memory in a first in first out basis. The intention is that there should be sufficient memory available to record all data for several incidents.

On receiving a valid emergency message the unit sounds the buzzer in loud mode and flashes an indicator. The positional information is Transmitted in the NMEA interface and an Emergency position waypoint with a sequential number starting with (EP01). This Emergency position waypoint with a sequential number cannot be reset.

If no positional information is present the unit sounds the buzzer in loud mode the indicator flashes and the positional information available on the NMEA interface is sent to an NMEA receiver device. In this case this information is logged and not updated until the device has been turned off.

## Claims

1. A receiver which displays the location of a beacon.

2. A receiver as claimed in claim 1 where the information is other than position information.

3. A receiver as claimed in Claim 1 or Claim 2 fitted with an acoustic alerting device.

4. A receiver as claimed in Claim 1 or Claim 2 fitted with a visual display.

5. A receiver as claimed in Claim 1 or Claim 2 fitted with a data communications link to other equipment.

6. A receiver as claimed in any previous Claim connected to equipment capable of controlling a vehicle, vessel or other device, such an equipment when suitably constructed, being able to steer the vehicle, vessel or other device to a position in the vicinity of the beacon position or to the beacon position.

7. A receiver as claimed in any previous Claim connected to other equipment.
